# EUROPÄISCHE PATENTANMELDUNG

(11) **EP 2 551 548 A2**
(43) Veröffentlichungstag der Anmeldung: **30.01.2013**
(21) Anmeldenummer: 12173709.2
(22) Anmeldetag: 27.06.2012
(51) Int. Cl.: F16F 9/38

(54) **Schutzrohranordnung für ein Kolben-Zylinder-Aggregat mit einer Kolbenstange**

(30) Priorität: 28.07.2011 DE 102011079986
(71) Anmelder: ZF Friedrichshafen AG, 88038 Friedrichshafen (DE)
(72) Erfinder: Nowotka, Thomas, 97539 Wonfurt (DE)

(57) **Zusammenfassung**

Es wird eine Schutzrohranordnung (1) für ein Kolben-Zylinder-Aggregat (11) mit einer Kolbenstange (12) angeboten, umfassend eine im Wesentlichen Scheibenförmig ausgeführte Tragkappe (2), sowie ein Schutzrohr (3), welches die Kolbenstange (12) unter Bildung eines radialen Spaltes zumindest teilweise umschließt.

Die Schutzrohranordnung (1) zeichnet sich gemäß der vorliegenden Erfindung dadurch aus, dass das Schutzrohr (3) in dessen Anlagebereich (31) axial vorstehende Zinnen (4) aufweist, wobei zwischen den Zinnen (4) freie Abschnitte (5) ausgeführt sind und wobei die Schutzrohranordnung (1) eine erste und eine zweite axial wirkende Sicherung (6;7) aufweist, welche das Schutzrohr (3) an der Tragkappe (2) formschlüssig axial festlegen, wobei die Sicherungen (6;7) jeweils aus einem gewickelten Bindeelement gebildet sind, welches um das Schutzrohr (3), über die Zinnen (4) in dessen Anlagebereich (31) gewickelt und zwischen den Zinnen (4), über die freien Abschnitte (5) gespannt ist, wodurch das Bindeelement durch die Hinterschneidung der gedachten Schutzrohrkontur zwischen den Zinnen (4), in den freien Abschnitten (5) des Schutzrohrs (3) Sekantenabschnitte definiert, welche eine formschlüssige Anlage (9) für die Tragkappe (2) bilden.

## Beschreibung

Die Erfindung betrifft eine Schutzrohranordnung für ein Kolben-Zylinder-Aggregat mit einer Kolbenstange, gemäß dem Oberbegriff des Patentanspruchs 1.

Ein Kolben-Zylinder-Aggregat mit einer gattungsgemäßen Schutzrohranordnung ist hinlänglich bekannt und findet beispielsweise als ein Federbein in der Automobilindustrie seine Verwendung.

Das Kolben-Zylinder-Aggregat umfasst in der Regel einen Arbeitszylinder, welcher mit einem Arbeitsmedium gefüllt ist, sowie eine Kolbenstange welche an einem Kolben, zumindest mittelbar festgelegt ist und in dem Arbeitszylinder axial geführt wird. Um einen Austritt des Arbeitsmediums aus dem Zylinderinneren ins Freie zu vermeiden, ist die Kolbenstange radial gegen den Arbeitszylinder mittels einer Kolbenstangendichtung abgedichtet, wobei diese die Kolbenstange radial umschließt und sich an die Kolbenstange presst und wobei sich die Kolbenstangendichtung mit deren Außenumfangsfläche gegen die Innenwand des Arbeitszylinders presst. Je nach Richtung der axialen Kolbenbewegungen fährt die an dem Kolben festgelegte Kolbenstange in den Arbeitszylinder ein oder fährt aus diesem aus. Um die zwischen der Kolbenstange und der Kolbenstangendichtung entstehende Reibung zu reduzieren wird die Oberfläche der Kolbenstange auf eine definierte Oberflächengüte optimiert. Es ist wichtig, die Kolbenstange gegen eventuelle Beschädigungen, welche durch Stöße oder Verschmutzungen verursacht werden, zu schützen, da sonst die Kolbenstangendichtung irreparabel durch Kratzer und Verschmutzungen an der Kolbenstangenoberfläche beschädigt wird.

Zum Schutz der Kolbenstange wird üblicher Weise ein Schutzrohr verwendet, welches zumindest mittelbar an dem austrittsseitigen Ende der Kolbenstange, festgelegt ist und die Kolbenstange unter Bildung eines radialen Freiraums zumindest teilweise umschließt. Dabei deckt das Schutzrohr den ins Freie aus dem Arbeitszylinder ausgefahrenen Kolbenstangenabschnitt zu jedem Federungszustand ab.

Gewöhnlich wird ein Schutzrohr aus Stahl auf die an der Kolbenstange festgelegte Tragkappe aufgepresst oder angeschweißt.

Ebenso ist eine Verwendung eines aus Kunststoff ausgeführten Rohres bekannt. Bei einem Schutzrohr aus Kunststoff wird sein geringes Gewicht als besonders vorteilhaft gesehen. Außer dem ist ein Kunststoff-Schutzrohr hoch korrosionsbeständig, wodurch auf eine zusätzliche Lackierung des Schutzrohrs verzichtet werden kann.

Die DE 1 951 753 U offenbart ein aus Kunststoff ausgeführtes Schutzrohr, wobei dessen Innenfläche eine sich in Richtung der Abdeckscheibe kegelförmig verjüngende Schrägfläche aufweist, welche mit einer Ringnut am Ende des Schutzrohrs endet. Die Verbindung des Schutzrohrs mit der an der Kolbenstange festgelegten Tragkappe erfolgt durch das Aufziehen des Schutzrohrs über die Tragkappe, welche dabei über die Schrägfläche gleitet und in die Ringnut einrastet.

Die spezielle Form des Schutzrohrs ist jedoch nicht ohne einen erheblichen Kostenaufwand herstellbar. Außerdem erfordert die Herstellung des Schutzrohrs eine hohe Präzision, da sonst die Verbindung bei einer zu tief und/oder zu breit ausgeführten Ringnut ein Spiel zwischen dem Schutzrohr der Tragkappe aufweisen wird. Bei einem Untermaß kann die aus Metall ausgeführte Tragkappe das aus Kunststoff ausgeführte Schutzrohr beim Aufziehen zerstören.

In der DE 1 995 281 U wird ein aus Kunststoff ausgeführtes Schutzrohr offenbart, welches mindestens eine thermisch geformte ringförmige Einschnürung aufweist, welche dessen Befestigung an der Tragkappe bewirkt. Die Einschnürung kann beispielsweise während des Montageprozess mittels einer thermoelektrischen Zange erzeugt werden.

Dieses Verfahren ist aber nur bei Schutzrohren realisierbar, welche aus einem thermoplastischen Kunststoff hergestellt sind, was den Kreis der für die Herstellung eines Schutzrohrs in Frage kommenden Werkstoffe stark eingrenzt.

Der vorliegenden Erfindung liegt die Aufgabe zugrunde, eine möglichst einfache und kostengünstig herstellbare Befestigung des Schutzrohrs an der Tragkappe zu entwickeln, die sowohl für die aus einem Thermoplast als auch für die aus einem Duroplast oder aus einem Metall hergestellten Schutzrohre geeignet ist und wobei diese die genannten Probleme löst.

Diese Aufgabe wird erfindungsgemäß durch die Bereitstellung einer Schutzrohranordnung für ein Kolben-Zylinder-Aggregat mit einer Kolbenstange gemäß Anspruch 1 sowie dem Verfahrensanspruch 6 gelöst.

Insbesondere sieht eine erfindungsgemäße Schutzrohranordnung für ein Kolben-Zylinder-Aggregat mit einer Kolbenstange vor, dass das Schutzrohr in dessen Anlagebereich axial vorstehende Zinnen aufweist, wobei zwischen den Zinnen freie Abschnitte ausgeführt sind und wobei die Schutzrohranordnung eine erste und eine zweite axial wirkende Sicherung aufweist, welche das Schutzrohr an der Tragkappe formschlüssig axial festlegen, wobei die Sicherungen jeweils aus einem gewickelten Bindeelement gebildet sind, welches um das Schutzrohr, über die Zinnen in dessen Anlagebereich gewickelt und zwischen den Zinnen, über die freien Abschnitte gespannt ist, wodurch das Bindeelement durch die Hinterschneidung der gedachten Schutzrohrkontur zwischen den Zinnen, in den freien Abschnitten des Schutzrohrs Sekantenabschnitte definiert, welche eine formschlüssige Anlage für die Tragkappe bilden.

Dadurch wird eine einfache, sichere und kostengünstige Befestigung des Schutzrohrs an der Tragkappe geschaffen, geeignet für Schutzrohre, welche aus einer sehr breiten Werkstoffpalette ausgeführt werden können. Eine erfindungsgemäße Befestigung ist sowohl für die aus einem Thermoplast als auch für die aus einem Duroplast hergestellten Schutzrohre realisierbar. Des Weiteren wird somit eine schweißfreie Befestigung von einem aus Metall ausgeführten Schutzrohr an einer Tragkappe ermöglicht, was z.B. beim Einsatz eines Leichtmetalls, wie beispielsweise Aluminium einen hohen Vorteil bedeutet, denn ein dünnwandiges, aus Aluminiumrohr gefertigtes Schutzrohr kann nicht ohne Einsatz sehr teurer Anlagen an der Tragekappe geschweißt werden.

Weitere vorteilhafte Ausgestaltungen der erfindungsgemäßen Schutzrohranordnung für ein Kolben-Zylinder-Aggregat mit einer Kolbenstange sind in den abhängigen Ansprüchen beschrieben.

Gemäß einer vorteilhaften Variante ist das zur Bildung der axial wirkenden Sicherungen verwendete Bindeelement aus einem Faser-Kunststoff-Verbund ausgeführt. Dabei wird ein Faserstrang in einer so genannten Matrixsubstanz getaucht und dann um das Schutzrohr auf die erfindungsgemäße Weise gewickelt. Als Matrix kann dabei ein in einen flüssigen Aggregatzustand gebrachter Kunststoff verwendet werden, welcher beim Aushärten eine stoffschlüssige Verbindung mit dem Schutzrohr eingeht. Dadurch wird die axial wirkende Sicherung unlösbar mit dem Schutzrohr verbunden, was hohe Festigkeitsvorteile mit sich bringt.

Eine weitere vorteilhafte Variante der erfindungsgemäßen Schutzrohranordnung sieht vor, dass das zur Bildung der axial wirkenden Sicherungen verwendete Bindeelement aus einem Draht ausgeführt ist. Dadurch können die Herstellungskosten deutlich reduziert und die Festigkeit der Befestigung erhöht werden.

Es kann durchaus sinnvoll sein, die erste axial wirkende Sicherung und die zweite axial wirkende Sicherung aus unterschiedlichen Werkstoffen auszuführen. Dadurch können unterschiedliche Eigenschaften der unterschiedlichen Werkstoffe nach belieben kombiniert werden.

Gemäß einer weiteren vorteilhaften Ausführung weisen die Zinnen, mindestens eine radiale Erhebung auf, welche im Bereich der freien axialen Enden der Zinnen ausgeführt ist, wobei sich diese in Richtung der axial wirkenden Sicherung, radial nach außen erstreckt. Durch diese Erhebung kann die axiale Erstreckung der axial wirkenden Sicherung definiert werden. Des Weiteren kann dadurch axialer Verschiebung der axial wirkenden Sicherung an dem Schutzrohr vorgebeugt werden.

Die Herstellung der erfindungsgemäßen Schutzrohranordnung kann durch die im Verfahrensanspruch beschriebenen Schritte erfolgen.

In einem ersten Schritt wird ein Werkzeug in das in einer Wickelmaschine eingespannte Schutzrohr von der dem Anlagebereich des Schutzrohrs gegenüberliegenden Seite bis zu der im Anlagebereich des Schutzrohrs für die Tragkappe vorgesehenen Position axial eingeführt. Die Stirnseite des Werkzeugs ist dabei derart ausgeformt ist, dass diese der Form der Tragkappe im Bereich der radialen Anlagefläche sowie einer der axialen Anlageflächen im Wesentlichen entspricht.

In einem zweiten Schritt wird eine erste axial wirkende Sicherung im Bereich der freien axialen Enden der Zinnen um das Schutzrohr über einen ersten Längenabschnitt der Zinnen aufgewickelt, wobei die Zinnen durch die erste Sicherung axial nur teilweise bedeckt werden, wobei sich die Sicherung zwischen den Zinnen, in den freien Abschnitten an das eingeführte Werkzeug anlegt.

Bei einer Verwendung eines aus Faser-Kunststoff-Verbund ausgeführten Bindeelements zur Herstellung der ersten axial wirkenden Sicherung, ist es sinnvoll nach dem Aufwickeln einen Aushärtevorgang vorzusehen. Wird dagegen ein Draht zur Bildung der ersten axial wirkenden Sicherung verwendet, so kann auf einen Aushärtevorgang verzichtet werden.

Durch die Form des Werkzeugs, welche der Form der Tragkappe im Bereich der radialen Anlagefläche sowie einer der axialen Anlageflächen, im Wesentlichen entspricht, entsteht so eine Negativform für die Anlage der entsprechenden axialen Anlagefläche der Tragkappe.

In einem dritten Schritt wird das Werkzeug aus dem Schutzrohr entfernt und durch die Tragkappe ersetzt, wobei diese axial an der durch die erste axial wirkende Sicherung definierter Negativform formschlüssig zur Anlage kommt. Die Tragkappe ist so dimensioniert, und die axiale Position der Tragkappe im Schutzrohr ist so gewählt, dass zwischen dem axialen Ende der Tragkappe und dem Schutzrohr in mindestens einem freien Abschnitt ein axialer Eingriffsspalt vorhanden ist.

In einem vierten Schritt wird um das Schutzrohr, über den restlichen, von der ersten axial wirkenden Sicherung unbedeckten axialen Längenabschnitt der Zinnen ein zweites Bindeelement aufgewickelt, wobei sich diese in den freien Abschnitten, durch den Eingriffspalt an das axial freie Ende der eingeführten Tragkappe anlegt.

Dadurch entsteht an der von den freien Enden der Zinnen abgewandten Seite der Tragkappe eine unlösbare Formschlussverbindung zwischen der Tragkappe und dem Schutzrohr.

Bei einer Verwendung eines aus Faser-Kunststoff-Verbund ausgeführten Bindeelements zur Herstellung der zweiten axial wirkenden Sicherung, ist es sinnvoll nach dem Aufwickeln einen Aushärtevorgang vorzusehen. Wird dagegen ein Draht zur Bildung der zweiten axial wirkenden Sicherung verwendet, so kann auf einen Aushärtevorgang verzichtet werden.

Anhand der folgenden Figuren soll die Erfindung beispielhaft näher erläutert werden. Es zeigen:
- Fig. 1a: eine perspektivische Darstellung einer erfindungsgemäßen Schutzrohranordnung gemäß Anspruch 1,
- Fig. 1b: eine Schnittdarstellung einer erfindungsgemäßen Schutzrohranordnung gemäß Anspruch 1,
- Fig. 2a: eine Schnittdarstellung einer erfindungsgemäßen Schutzrohranordnung gemäß Anspruch 1, nach der Ausführung des ersten Schrittes des im Verfahrensanspruch erläuterten Verfahrens,
- Fig. 2b: eine Schnittdarstellung einer erfindungsgemäßen Schutzrohranordnung gemäß Anspruch 1, nach der Ausführung des zweiten Schrittes des im Verfahrensanspruch erläuterten Verfahrens,
- Fig. 2c: eine Schnittdarstellung einer erfindungsgemäßen Schutzrohranordnung gemäß Anspruch 1, nach der Ausführung dritten Schrittes des im Verfahrensanspruch erläuterten Verfahrens,
- Fig. 2d: eine Schnittdarstellung einer erfindungsgemäßen Schutzrohranordnung gemäß Anspruch 1, nach der Ausführung vierten Schrittes des im Verfahrensanspruch erläuterten Verfahrens,
- Fig. 3a: eine Schnittdarstellung des erfindungsgemäßen Schutzrohrs,
- Fig. 3b: zinnenseitige Draufsicht des erfindungsgemäßen Schutzrohrs,
- Fig. 4a: eine Schnittdarstellung des erfindungsgemäßen Schutzrohrs mit einer an der Zinne ausgeführten radialen Erhebung,
- Fig. 4b: eine Schnittdarstellung einer erfindungsgemäßen Schutzrohranordnung mit einer an der Zinne ausgeführten radialen Erhebung,
- Fig. 4c: zinnenseitige Draufsicht des erfindungsgemäßen Schutzrohrs mit einer an der Zinne ausgeführten radialen Erhebung.

Im Folgenden sollen die Figuren näher erläutert werden.

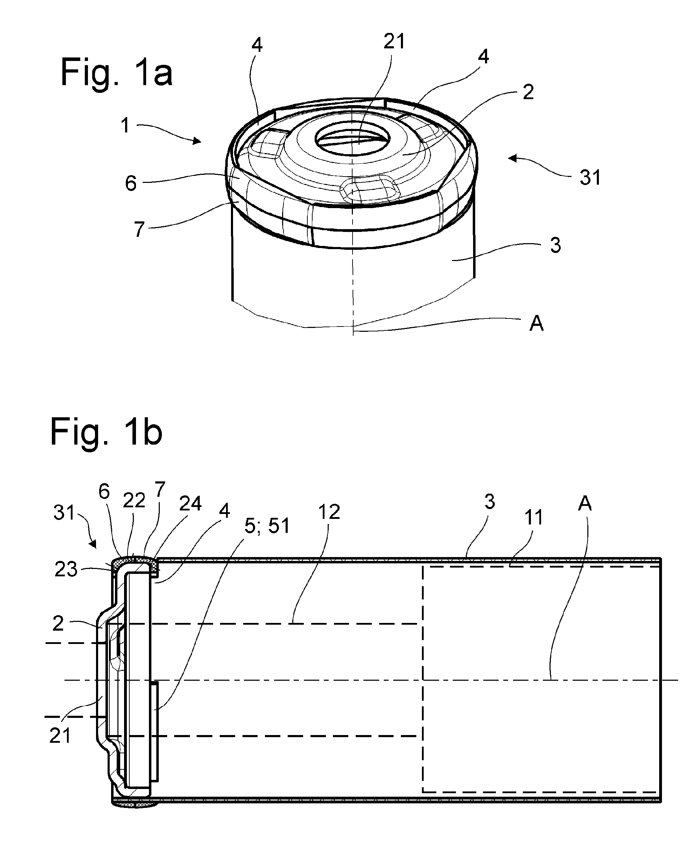

Die Fig. 1a, 1b, 2d und 4b zeigen jeweils eine erfindungsgemäße Schutzrohranordnung 1 für ein Kolben-Zylinder-Aggregat 11 mit einer Kolbenstange 12, wobei die Position des Kolben-Zylinder-Aggregats 11 und der Kolbenstange 12 aus Übersichtsgründen nur in der Fig. 1b mittels einer gestrichelten Linie angedeutet ist.

Die Fig. 1a und 1b, zeigen jeweils eine erfindungsgemäße Schutzrohranordnung 1 gemäß Anspruch 1. Die abgebildete Schutzrohranordnung 1 umfasst eine im Wesentlichen scheibenförmig ausgeführte Tragkappe 2, ein Schutzrohr 4, sowie eine erste axial wirkende Sicherung 6 und eine zweite axial wirkende Sicherung 7. Die in den Fig. 1a, 1b, 2c, 2d und 4b abgebildete Tragkappe 2 ist in ihrem radial äußeren Umfangsbereich abgewinkelt, was den Einsatz eines verhältnismäßig dünnen Blechs für die Herstellung der Tragkappe 2 ermöglicht. Dadurch kann Gewicht eingespart und die Stabilität der Tragkappe erhöht werden. Selbstverständlich kann zur Herstellung der erfindungsgemäßen Schutzrohranordnung 1 auch eine scheibenförmige Tragkappe 2 mit zwei gleichgerichteten Grundflächen und ohne eines Abgewinkelten Randes genommen werden.

Die Tragkappe 2 weist eine Befestigungsöffnung 21 zur Aufnahme einer Kolbenstange 12 auf. Des Weiteren weist die Tragkappe 2 eine sich zumindest teilweise über deren Umfangsbereich erstreckende radiale Anlagefläche 22 auf, wobei diese von einer ersten axialen Anlagefläche 23 und einer zweiten axialen Anlagefläche 24 begrenzt wird. Die axialen Anlageflächen 23; 24 befinden sich jeweils an einer Seite der Tragkappe 2 und erstrecken sich, bezogen auf eine Längsachse A der Schutzrohranordnung 1 radial über die Tragkappe 2.

Des Weiteren weist die erfindungsgemäße Schutzrohranordnung 1 ein Schutzrohr 3, welches die Kolbenstange 12 unter Bildung eines radialen Freiraums zumindest teilweise umschließt. Das Schutzrohr 3 weist an einem Ende einen Anlagebereich 31 zur Anlage des Schutzrohrs 3 an der Tragkappe 2 auf.

Die Tragkappe 2 ist in das Schutzrohr 3 eingeführt ist und kommt an der radialen Anlagefläche 22 der Tragkappe 2 in dem Anlagebereich 31 des Schutzrohrs 3 mit diesem zur Anlage.

Wie weiterhin aus den Fig. 1 a und 1 b entnehmbar ist, weist das Schutzrohr 3 in dessen Anlagebereich 31 axial vorstehende Zinnen 4 auf, wobei wischen den Zinnen 4 freie Abschnitte 5 ausgeführt sind.

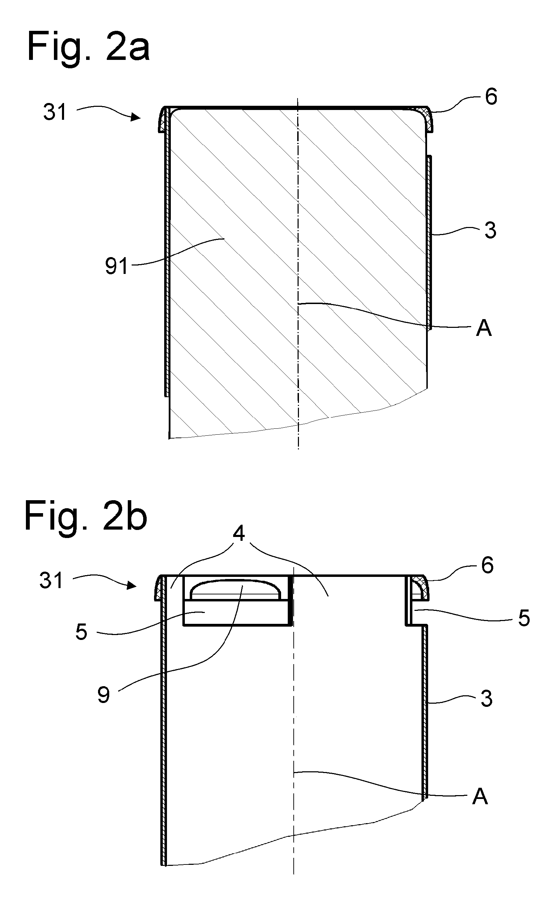

Die in das Schutzrohr 3 eingeführte Tragkappe 2 ist mittels einer ersten und einer zweiten axial wirkenden Sicherung 6; 7 formschlüssig mit dem Schutzrohr verbunden. Die beiden axial wirkenden Sicherungen 6; 7 sind jeweils aus einem gewickelten Bindeelement gebildet, welches um das Schutzrohr 3, über die Zinnen 4 in dessen Anlagebereich 31 gewickelt und zwischen den Zinnen 4 und über die freien Abschnitte 5 gespannt. Dadurch definiert das Bindeelement durch die Hinterschneidung der gedachten Schutzrohrkontur der zwischen den Zinnen 4, in den freien Abschnitten 5 des Schutzrohrs 3 Sekantenabschnitte, welche eine formschlüssige Anlage 9 für die Tragkappe 2 bilden. Die formschlüssige Anlage 9 ist in der Fig. 2b besonders deutlich ersichtlich.

Wie in der Fig. 2a abgebildet, ist ein Werkzeug 91 in das in einer hier nicht abgebildeten Wickelmaschine eingespannte Schutzrohr 3 von der dem Anlagebereich 31 des Schutzrohrs 3 gegenüberliegenden Seite, bis zu der im Anlagebereich 31 des Schutzrohrs 3 für die Tragkappe 2 vorgesehenen Position axial eingeführt. Die Stirnseite des Werkzeugs 91 ist derart ausgeformt, dass diese der Form der Tragkappe 2 im Bereich der radialen Anlagefläche 22 sowie einer der axialen Anlageflächen 23; 24, im Wesentlichen entspricht.

Des Weiteren zeigt die Fig. 2a, dass die erste axial wirkende Sicherung 6 im Bereich der freien axialen Enden der Zinnen 4 um das Schutzrohr 3 über die Zinnen 4 aufgewickelt wurde, wobei die Zinnen 4 durch die erste axial wirkende Sicherung 6 axial nur teilweise bedeckt sind und wobei sich die Sicherung 6 zwischen den Zinnen 4, in den freien Abschnitten 5 an das eingeführte Werkzeug 91 anlegt.

Die Fig. 2b zeigt die erfindungsgemäße Schutzrohranordnung 1 nach dem das Werkzeug 91 aus dem Schutzrohr 3 entfernt wurde. Durch die vorstehend beschriebenen Schritte wurde eine Negativform für die Anlage der entsprechenden axialen Anlagefläche 23; 24 der Tragkappe 2 gebildet. Hier ist ebenfalls deutlich ersichtlich, dass die erste axial wirkende Sicherung 6 im Bereich der freien axialen Enden der Zinnen 4 um das Schutzrohr 3 über die Zinnen 4 aufgewickelt ist. Die Zinnen 4 sind durch die erste axial wirkende Sicherung 6 axial nur teilweise bedeckt. Des Weiteren ist hier die zwischen den Zinnen 4, in den freien Abschnitten 5 gebildete formschlüssige Anlage 9 für die Tragkappe 2 erkennbar. Es ist anzunehmen, dass nach dem Aufwickeln der ersten axial wirkenden Sicherung 6, bei einer Verwendung eines aus Faser-Kunststoff-Verbund ausgeführten Bindeelements zur Herstellung der ersten axial wirkenden Sicherung 6 ein Aushärtevorgang vorgesehen war. Wenn dagegen ein Draht zur Bildung der ersten axial wirkenden Sicherung 6 verwendet worden wäre, so wäre ein Aushärtevorgang nicht nötig gewesen.

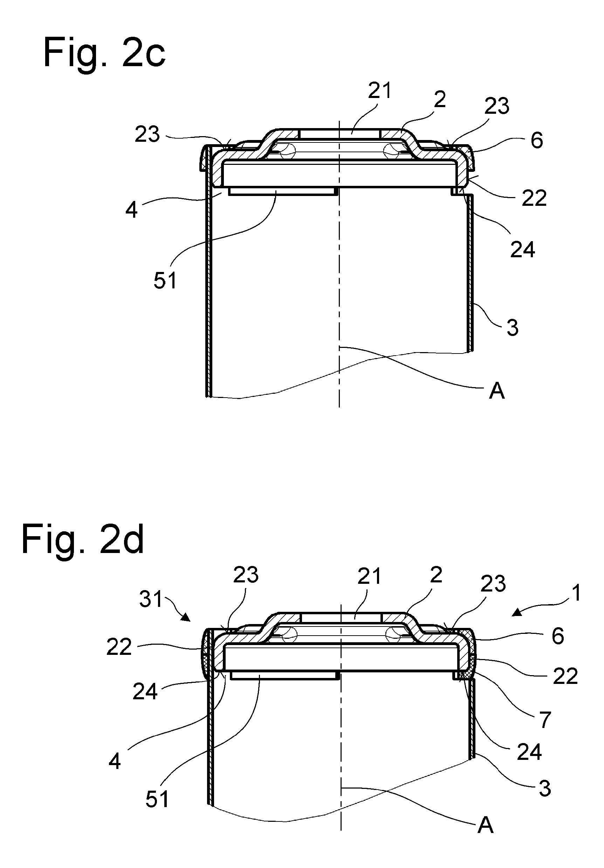

In der Fig. 2c ist erkennbar, dass die Tragkappe 2 in das Schutzrohr 3 eingeführt ist wobei die Tragkappe 2 axial an der durch die erste axial wirkende Sicherung 6 definierten Anlage 9 formschlüssig zur Anlage kommt. Des Weiteren ist hier deutlich dargestellt, dass zwischen dem axial freien Ende der Tragkappe 2 und dem Schutzrohr 3 in dem freien Abschnitt 5, zwischen den Zinnen 4 ein axiale Eingriffsspalt 51 vorhanden ist.

Die Fig. 2d zeigt eine gemäß dem Verfahrensanspruch fertig gestellte erfindungsgemäße Schutzrohranordnung 1. Es ist erkennbar, dass die zweite axial wirkende Sicherung 7 um das Schutzrohr 3, über die freie, also nicht durch die erste axial wirkende Sicherung 6 bedeckte Fläche der Zinnen 4 aufgewickelt ist, wobei sich die zweite axial wirkende Sicherung 7 in den freien Abschnitten 5 durch den Eingriffsspalt 51 an das axial freie Ende der Tragkappe 2 anlegt.

Es ist Somit wird eine formschlüssige Verbindung von der Tragkappe 2, dem Schutzrohr 3 und den axial wirkenden Sicherungen 6; 7 auf eine sehr einfache Weise hergestellt.

Bei einer Verwendung eines aus Faser-Kunststoff-Verbund ausgeführten Bindeelements zur Herstellung der zweiten axial wirkenden Sicherung 7, war es hier sinnvoll nach dem Aufwickeln einen Aushärtevorgang vorzusehen. Wird dagegen ein Draht zur Bildung der zweiten axial wirkenden Sicherung 7 verwendet, so kann auf einen Aushärtevorgang verzichtet werden.

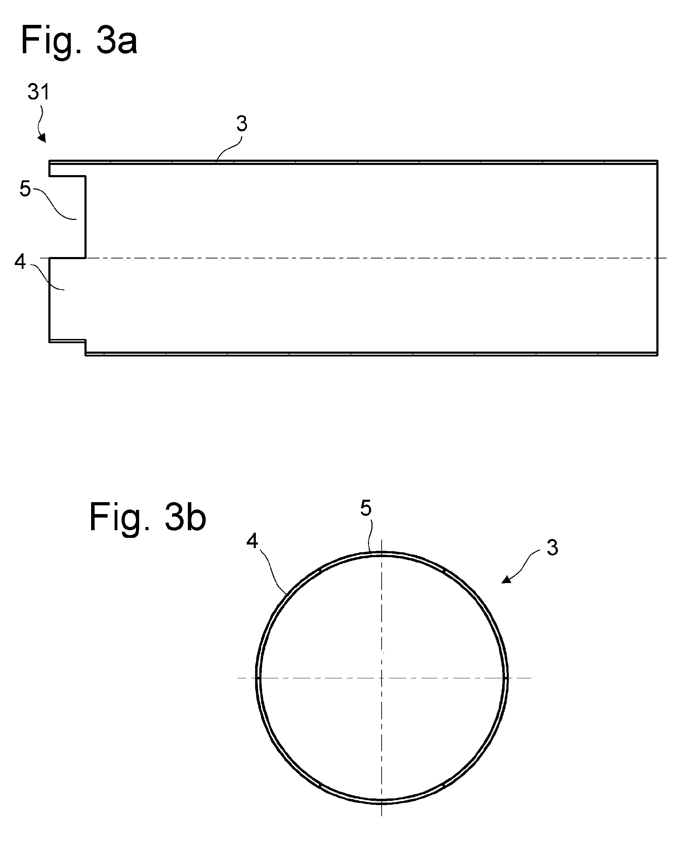

Die Fig. 3a und 3b zeigen das Schutzrohr 3 aus zwei Ansichten. Der Fig. 3a zeigt ein erfindungsgemäßes Schutzrohr 3, welches an einem Ende axial vorstehende Zinnen 4 aufweist, wobei zwischen den Zinnen 4 freie Abschnitte 5 ausgeführt sind. Besonders gut sichtbar ist hier der an dem mit den Zinnen 4 versehenen Ende des Schutzrohrs 3 ausgeführter Anlagebereich 31 zur Anlage des Schutzrohrs 3 an der Tragkappe 2.

Die Fig. 3b zeigt ein Beispiel, wie die Zinnen 4 und die freien Abschnitte 5 an dem Schutzrohr ausgeführt werden können.

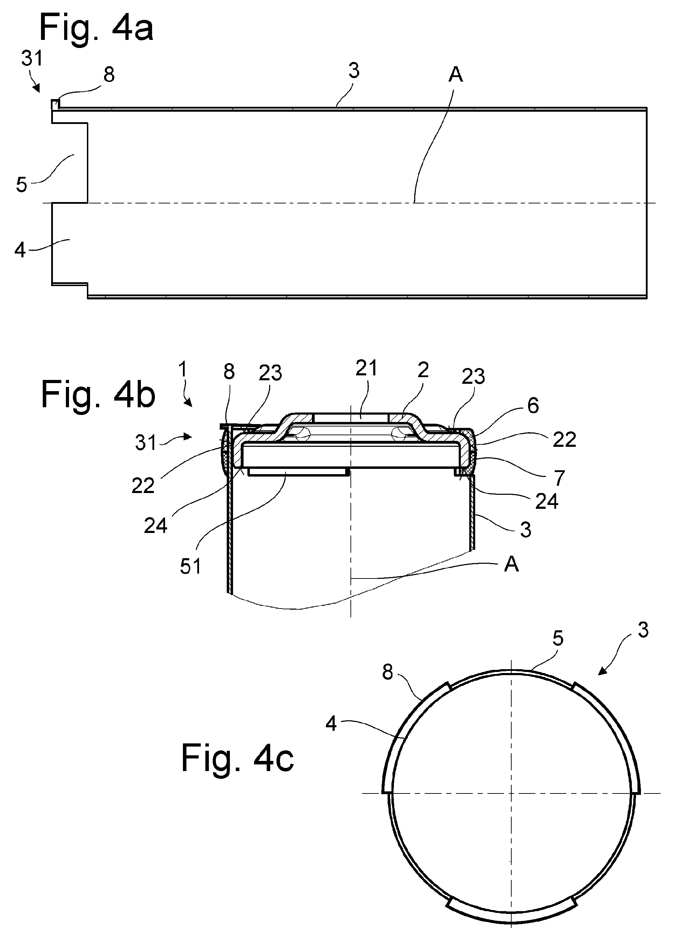

Die Fig. 4a, 4b und 4c zeigen nebst den bereits aus den anderen Figuren bekannten Merkmalen der erfindungsgemäßen Schutzrohranordnung, dass die Zinnen 4, mindestens eine radiale Erhebung 8 aufweisen, welche im Bereich der freien axialen Enden der Zinnen 4 ausgeführt ist, wobei sich diese in Richtung der axial wirkenden Sicherung 6, radial nach außen erstreckt.

### Bezugszeichenliste

- A: Längsachse der Schutzrohranordnung
- 1: Schutzrohranordnung
- 11: Kolben-Zylinder-Aggregat
- 12: Kolbenstange
- 2: Tragkappe
- 21: Befestigungsöffnung
- 22: radiale Anlagefläche
- 23: erste axiale Anlagefläche
- 24: zweite axiale Anlagefläche
- 3: Schutzrohr
- 31: Anlagebereich
- 4: Zinne
- 5: freier Abschnitt
- 6: erste axial wirkende Sicherung
- 7: zweite axial wirkende Sicherung
- 8: radiale Erhebung
- 9: formschlüssige Anlage
- 91: Werkzeug

## Patentansprüche

1. Schutzrohranordnung (1) für ein Kolben-Zylinder-Aggregat (11) mit einer Kolbenstange (12),
umfassend:
● eine im Wesentlichen Scheibenförmig ausgeführte Tragkappe (2), wobei die Tragkappe (2) eine Befestigungsöffnung (21) zur Aufnahme der Kolbenstange (12) aufweist und wobei die Tragkappe (2) eine sich zumindest teilweise über deren Umfangsbereich erstreckende radiale Anlagefläche (22) aufweist, wobei diese von einer ersten axialen Anlagefläche (23) und einer zweiten axialen Anlagefläche (24) begrenzt wird, wobei sich die axialen Anlageflächen (23; 24) jeweils an einer Seite der Tragkappe (2) befinden und sich, bezogen auf eine Längsachse (A) der Schutzrohranordnung (1) zumindest teilweise über die Tragkappe (2) radial erstrecken,
● ein Schutzrohr (3), welches die Kolbenstange (12) unter Bildung eines radialen Freiraums zumindest teilweise umschließt, wobei das Schutzrohr (3) an einem Ende einen Anlagebereich (31) zur Anlage des Schutzrohrs (3) an der Tragkappe (2) aufweist und wobei die Tragkappe (2) innerhalb des Schutzrohrs (3) eingeführt ist und an der radialen Anlagefläche (22) der Tragkappe (2) in dem Anlagebereich (31) des Schutzrohrs (3) mit diesem zur Anlage kommt,
**dadurch gekennzeichnet, dass** das Schutzrohr (3) in dessen Anlagebereich (31) axial vorstehende Zinnen (4) aufweist, wobei zwischen den Zinnen (4) freie Abschnitte (5) ausgeführt sind und wobei die Schutzrohranordnung (1) eine erste und eine zweite axial wirkende Sicherung (6; 7) aufweist, welche das Schutzrohr (3) an der Tragkappe (2) formschlüssig axial festlegen, wobei die Sicherungen (6; 7) jeweils aus einem gewickelten Bindeelement gebildet sind, welches um das Schutzrohr (3), in dessen Anlagebereich (31), über die Zinnen (4) gewickelt und zwischen den Zinnen (4), über die freien Abschnitte (5) gespannt ist, wodurch das Bindeelement durch die Hinterschneidung der gedachten Schutzrohrkontur zwischen den Zinnen (4), in den freien Abschnitten (5) des Schutzrohrs (3) Sekantenabschnitte definiert, welche eine formschlüssige Anlage (9) für die Tragkappe (2) bilden.

2. Schutzrohranordnung (1) für ein Kolben-Zylinder-Aggregat (11) mit einer Kolbenstange (12) nach Anspruch 1, **dadurch gekennzeichnet, dass** die axial wirkende Sicherung (6; 7) aus einem Faser-Kunststoff-Verbund ausgeführt ist.

3. Schutzrohranordnung (1) für ein Kolben-Zylinder-Aggregat (11) mit einer Kolbenstange (12) nach Anspruch 1, **dadurch gekennzeichnet, dass** die axial wirkende Sicherung (6; 7) aus einem Draht ausgeführt ist.

4. Schutzrohranordnung (1) für ein Kolben-Zylinder-Aggregat (11) mit einer Kolbenstange (12) nach einem der Ansprüche 1 bis 3, **dadurch gekennzeichnet, dass** die erste axial wirkende Sicherung (6) und die zweite axial wirkende Sicherung (7) aus unterschiedlichen Werkstoffen ausgeführt sind.

5. Schutzrohranordnung (1) für ein Kolben-Zylinder-Aggregat (11) mit einer Kolbenstange (12) nach einem der Ansprüche 1 bis 4, **dadurch gekennzeichnet, dass** die Zinne (4), mindestens eine radiale Erhebung (8) aufweist, welche im Bereich der freien axialen Enden der Zinnen (4) ausgeführt ist, wobei sich diese in Richtung der axial wirkenden Sicherung (6; 7) radial nach außen erstreckt.

6. Verfahren zur Herstellung einer Schutzrohranordnung (1) für ein Kolben-Zylinder-Aggregat (11) mit einer Kolbenstange (12) gemäß einem der Ansprüche 1 bis 4, **dadurch gekennzeichnet, dass** das Verfahren folgende Schritte aufweist:
● in einem ersten Schritt wird ein Werkzeug (91) in das in einer Wickelmaschine eingespannte Schutzrohr (3) von der dem Anlagebereich (31) des Schutzrohrs (3) gegenüberliegenden Seite bis zu der im Anlagebereich (31) des Schutzrohrs (3) für die Tragkappe (2) vorgesehenen Position axial eingeführt, wobei die Stirnseite des Werkzeugs (91) derart ausgeformt ist, dass diese der Form der Tragkappe (2) im Bereich der radialen Anlagefläche (22) sowie einer der axialen Anlageflächen (23; 24), im Wesentlichen entspricht,
● in einem zweiten Schritt wird die erste axial wirkende Sicherung (6) im Bereich der freien axialen Enden der Zinnen (4) um das Schutzrohr (3) über die Zinnen (4) aufgewickelt, wobei die Zinnen (4) durch die erste axial wirkende Sicherung (6) axial nur teilweise bedeckt werden und wobei sich die Sicherung (6) zwischen den Zinnen (4), in den freien Abschnitten (5) an das eingeführte Werkzeug (91) anlegt, wodurch eine Negativform für die Anlage der entsprechenden axialen Anlagefläche (23; 24) der Tragkappe (2) gebildet wird,
● in einem dritten Schritt wird das Werkzeug (91) aus dem Schutzrohr (3) entfernt und durch die Tragkappe (2) ersetzt, wobei diese axial an der durch die erste axial wirkende Sicherung (6) definierter Negativform formschlüssig zur Anlage kommt, wobei zwischen dem axial freien Ende der Tragkappe 2 und dem Schutzrohr 3 in dem freien Abschnitt 5, zwischen den Zinnen 4 ein axialer Eingriffsspalt (51) vorhanden ist,
● in einem vierten Schritt wird um das Schutzrohr (3), über die freie, also nicht durch die erste axial wirkende Sicherung (6) bedeckte Fläche der Zinnen (4) die zweite axial wirkende Sicherung (7) aufgewickelt, wobei sich diese in den freien Abschnitten (5) durch den Eingriffsspalt (51) an das axial freie Ende der eingeführten Tragkappe (2) anlegt.

7. Verfahren zur Herstellung einer Schutzrohranordnung (1) für ein Kolben-Zylinder-Aggregat (11) mit einer Kolbenstange (12) nach Anspruch 6, **dadurch gekennzeichnet, dass** zwischen dem zweiten Schritt und dem dritten Schritt ein Aushärtevorgang für die axial wirkende Sicherung (6; 7) vorgesehen ist.

8. Verfahren zur Herstellung einer Schutzrohranordnung (1) für ein Kolben-Zylinder-Aggregat (11) mit einer Kolbenstange (12) nach einem der Ansprüche 6 oder 7, **dadurch gekennzeichnet, dass** nach dem vierten Schritt ein Aushärtevorgang für die axial wirkende Sicherung (6; 7) vorgesehen ist.
